## Europäisches Patentamt

(19) **European Patent Office**

**Office européen des brevets**

(11) Publication number: **0 023 116**
**B1**

(12) **EUROPEAN PATENT SPECIFICATION**

(45) Date of publication of patent specification: **28.09.83**

(51) Int. Cl.³: **H 02 P 13/18, H 02 P 5/40**

(21) Application number: **80302348.0**

(22) Date of filing: **10.07.80**

(54) PWM inverter device.

(30) Priority: **13.07.79 JP 88163/79**

(43) Date of publication of application:
**28.01.81 Bulletin 81/4**

(45) Publication of the grant of the patent:
**28.09.83 Bulletin 83/39**

(84) Designated Contracting States:
**CH DE FR GB LI**

(56) References cited:
EP - A - 0 022 663
DE - A - 2 554 222
GB - A - 1 380 730
US - A - 3 604 995
US - A - 3 694 718
US - A - 3 800 211
US - A - 3 967 173
US - A - 4 047 083

SIEMENS-ZEITSCHRIFT, Vol. 45, No. 3, 1971
K. HEINTZE et al. "Pulswechselrichter zur
Drehzahlsteuerung von Asynchronmaschinen"
pages 154 to 161

(73) Proprietor: **TOYO DENKI SEIZO KABUSHIKI KAISHA**
**No. 7-2 2-Chome Yaesu Chuo-Ku**
**Tokyo 104 (JP)**

(72) Inventor: **Kohata, Masakazu**
**No. 10-7, 6-Chome, Oh-Machi**
**Kamakura City (JP)**
Inventor: **Sano, Takashi**
**No. 207, Sasanodai Asahi-ku**
**Yokohama City (JP)**
Inventor: **Miyashita, Ichiro**
**No. 4720-1, Fukuda**
**Yamato City (JP)**

(74) Representative: **Haggart, John Pawson et al,**
**Page, White & Farrer 5 Plough Place New Fetter Lane**
**London EC4A EC4 (GB)**

Courier Press, Leamington Spa, England

PWM inverter device

The present invention relates to a PWM inverter device, operating in accordance with a pulse width modulation (PWM) principle, for energizing an A.C. motor.

In a conventional PWM inverter, the control is effected by using a square waveform voltage obtained by chopping a certain D.C. voltage so that the waveform of the chopped current may differ at each pulse width modulated cycle. The value of the commutating current varies greatly depending on the pulse train even under constant load condition. More especially, the period of one cycle of the inverter is prolonged in inverse proportion to the output frequency of the inverter for low speed operation. Therefore the number of triangular waves of the carrier signal which occur in this period or the pulse mode is generally increased at lower speed and thus the peak current at current commutation is suppressed. In this case, the waveform of the input current for the inverter assumes the same form as the motor current, the motor being essentially an RL circuit, and increases exponentially so that the current in the voltage pulse at the end of each of the repetition pulses also increases exponentially. Due to this fact the thyristor element and the current commutating circuit elements forming the inverter device should be selected to withstand the maximum current. The inverter input current includes high frequency components which are 6 times higher than the inverter output frequency, as well as the chopping frequency, since the input current flows from the feeder through a filter in the form of three-phase full-wave rectification of the motor current by the inverter. For this reason, at times of low frequency operation such as the starting time, the feeder current may not be sufficiently smoothed because the filter efficiency is low, so that the feeder current may contain ripple components. Moreover in the line constituting a return path, in which the inverter input current flows, there is also a flow of security signal current which is usually at mains frequency. Accordingly, when an electric train is driven by a PWM inverter, the frequency range of the security signal system passes the device in the low frequency range especially at the starting time since the filtering effect is decreased at such low frequency range and signal trouble might be caused.

It is an object of the present invention to overcome the aforementioned disadvantages of the prior art devices and to provide a modulation system which is able to ease the current commutating load of the inverter and to decrease the currents of lower harmonic component so as to obtain a small and light weight device.

A PWM inverter device for energizing an A.C. motor, which device has a variable voltage and variable frequency output produced from a D.C. source by pulse width modulation, in which a triangular waveform is chopped by an asynchronous sawtooth waveform whose frequency is related to the inverter output frequency, is described and claimed in copending European Patent Application No. 80302349.8 (Publication number 2263). A device according to the preamble of claim 1 is described in DE—C—1 095 931.

According to the invention there is provided a PWM inverter device for energizing an A.C. motor, which device has a variable voltage and variable frequency output produced from a D.C. source by pulse width modulation, comprising an oscillator for generating a pulse train whose frequency is an integral multiple of the output frequency is an integral multiple of the output frequency of the inverter, a function waveform generator controlled by the oscillator to generate a level signal whose frequency is related to the inverter output frequency, a triangular waveform generator for generating a triangular waveform carrier signal whose frequency is related to that of the inverter output signal, and a modulator for comparing and mixing the level signal with the triangular waveform carrier signal, characterised in that the function waveform generator is constructed to produce a level signal which is a sawtooth waveform having an exponential rise or fall, and the triangular waveform generator is operable to produce a triangular waveform carrier signal whose frequency is an integral multiple of the frequency of that level signal.

Some embodiments of the invention will now be described, by way of example, with reference to the accompanying drawings, in which:—

Figure 1 is a block diagram of a typical conventional circuit arrangement of a PWM inverter device;

Figure 2 is a waveform diagram explaining the operation of the device shown in Figure 1;

Figure 3 is a block diagram of a PWM inverter device according to the present invention;

Figure 4 is a waveform diagram explaining the operation of the device of Figure 3;

Figures 5 to 7 are waveform diagrams for explaining effect of the modulating part of the inverter device of Figure 3; and

Figure 8 is a block diagram of a modified embodiment according to the present invention.

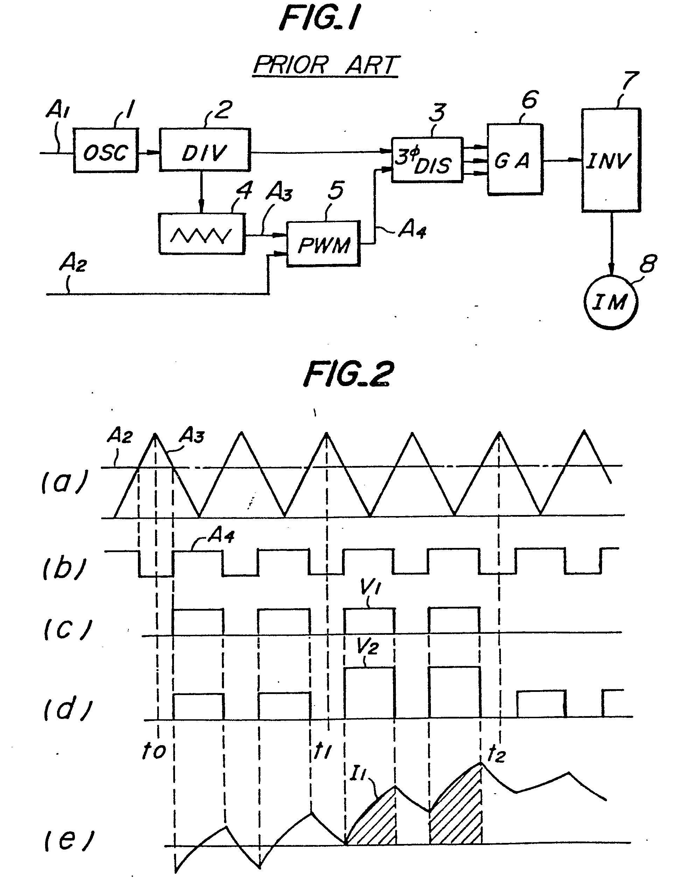

In order to assist understanding of the invention, a conventional device will first be explained with reference to Figures 1 and 2.

Figure 1 shows a block diagram of a basic construction of modulation part of an inverter of a convention type. An oscillator 1 feeds a frequency divider 2 whose output is connected to a three-phase signal distributor 3 and a triangular waveform generator 4. The triangular waveform output A3 from the generator 4 is fed to a pulse width modulator 5 where it is compared with a constant voltage level signal A2. The output A4 from the modulator 5 is also fed to the three-phase distributor 3 whose outputs are connected to a gate controller 6 whose output is fed to an inverter 7 which controls an A.C. motor 8.

Operation of the device shown in Figure 1 will be explained by referring to waveforms shown in Figure 2.

A frequency instruction $A_1$ for designating the operating frequency of the inverter is applied to the oscillator 1 which generates a pulse train having frequency which is an integral multiple of the operating frequency of the inverter. The frequency divider 2 divides said frequency to the minimum necessary multiplex frequency for deriving the respective phase voltage signal of the inverter 7, and applies it to the triangular waveform generator 4. The three-phase signal distributor 3 also receives the output pulse train from the frequency divider 2 and converts it into respective phase signals. The three-phase signal distributor 3 is also supplied with the output signal A4 of the modulator 5 as the chopping instruction and modulates said respective phase signals by means of this waveform A4. The gate controller 6 derives from the output of the three-phase signal distributor 3, a gate signal for application to a switching element in each phase of the inverter 7, which includes for instance a thyristor. The gate controller 6 may also generate a signal for controlling the current commutating operation of the switching element which forms the inverter 7 when the element requires such current commutation.

The chopping instruction waveform A4 can be obtained in the following manner.

A triangular waveform carrier signal A3 at the output of the triangular waveform generator 4 is compared with a constant voltage level signal A2 which is a voltage instruction, and for example, if the carrier signal A3 is higher than the level signal A2, the output of the modulator 5 appears as a logic value "L", whereas when the level signal A2 is higher than the carrier signal A3, the output of the modulator 5 appears as a logic value "H". The chopping instruction waveform A4 obtained in the foregoing manner, is used to modulate each phase voltage signal of the three-phase signal distributor 3. One phase voltage waveform $V_1$ which is applied between motor terminals U and V is for example as shown in Figure 2 (c). A voltage to be applied between motor terminals V and W which is delayed by 60° from the voltage waveform $V_1$ is represented by the phase waveform $V_2$ which is shown in Figure 2 (d). A current waveform $I_1$ flowing through the A.C. motor 8 by application of the phase voltage waveform $V_2$ is shown in Figure 2 (e).

Since the triangular waveform carrier signal A3 should be an integral multiple of the inverter operating frequency, the frequency divider 2 is usually formed in the following way. An example of a simple circuitry which could be easily conceived by those skilled in the electronics art is that to produce a frequency division of 1/2 at the 1st stage, and to produce further division to 1/4 at the 2nd stage, and generally to $2^{-n}$ (where n is the number of stages and $n = 1, 2, 3 \ldots$) at each successive stage. If we assume the number of stages is 4 ($n = 4$), the output frequency of the final output stage is 1/16 of the input pulse frequency. Also we may obtain frequency divisions by 1/2, 1/4, or 1/8 as intermediate outputs. Using these synchronizing pulses the triangular waveform generator 4 is controlled and the desired triangular waveform signal A3 is an integral multiple of the inverter operating frequency.

In this conventional modulation system of the inverter, the inverter current during 1/6 of the cycle of the inverter from time $t_1$ to time $t_2$ may have a waveform as shown in Figure 2 (e) which increases with the lapse of time. The D.C. input current flowing in the inverter 7 is equal to the fullwave rectification of the respective phase current and it assumes a waveform which is a repetition of the hatched portion shown in Figure 2 (e). As can be seen from this example, the difference of current values at the beginning and at the end of a period starting from an instant $t_1$ and terminating at an instant $t_2$ generates a ripple component of the inverter input current including 6 times high harmonics of the inverter output frequency. This will cause an increase in the commutating current at the terminating period of the chopping. Furthermore, the ripple component may give trouble in a security signal system although a substantial part of that component is removed by the filter.

The present invention provides a novel device for modulating the aforementioned chopping instruction signal, which decreases the current ripple in the inverter input current, effectively prevents security signal trouble, and is of compact construction.

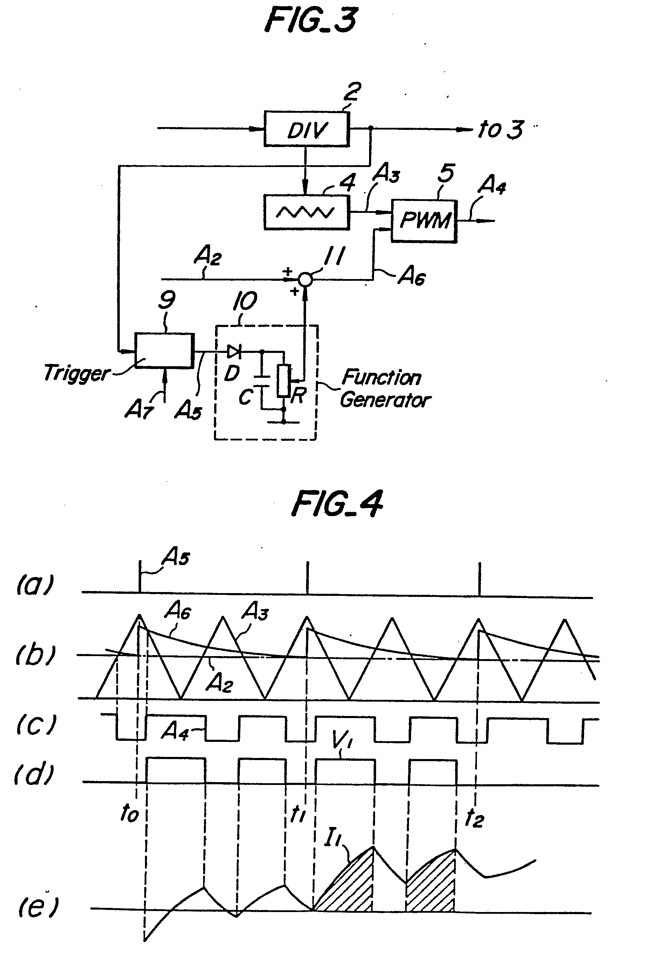

Figure 3 shows the modulation part of a PWM inverter device according to the present invention, in which a trigger pulse generator 9 feeds a function generator 10. In Figure 3, the same parts as in Figure 1 are designated by the same reference numerals. Figure 4 is a waveform diagram explaining the operation of the circuit of Figure 3.

The trigger pulse generator 9 generates trigger pulses A5 having very narrow pulse width at predetermined instants synchronized with the inverter output frequency. The function waveform generator 10 is constructed to produce an output signal having time function starting from an initial value at the instant when a trigger pulse occurs. The function waveform generator 10 is of an exponential type including a capacitor C which is charged through a diode D and A resistor R, and has discharge characteristics determined by the RC elements.

The capacitor C is sufficiently charged by the trigger pulse, which has very narrow pulse width, by arranging for the output impedance of the trigger pulse generator 9 to be small. After charging of the capacitor C, the output of the trigger pulse generator 9 falls to zero voltage, and the diode D is blocked. All of the charge stored in the capacitor C is discharged through the resistor R and the voltage across the capacitor C falls exponentially. The resistor R may be a fixed value resistor if the amplitude of the function waveform to be added to the constant voltage level signal A2 can previously be selected according to the characteristics of the motor. The fixed value of the resistor R should give the desired voltage division ratio and the desired resistance value for discharge. The output of the function generator 10 produced in the aforementioned manner is added in an adder 11 to the level signal A2, which is same as in Figure 1, and a sawtooth function waveform A6 having an exponential fall as shown in Figure 4 (b) is obtained.

The inverter input current therefore assumes a waveform as shown by the hatched line portion of Figure 4 (e). The current waveform $I_1$ varies from a small initial pulse value and wide pulse width to one having larger pulse value and narrower pulse width. The total area of the hatched portion is nearly the same for each of the pulses and accordingly the average value of the inverter input current which is a nearly constant value can be obtained.

This embodiment of the present invention can be operated in the same way as the conventional device shown in Figure 1 by applying an interruption instruction A7 to a control terminal of the trigger pulse generator 9 which stops the generation of trigger pulses. Therefore, when the filtering effect is sufficient because of an increase of the inverter frequency or when the effect produced by the present invention is not required because of a decrease in the number of pulses of the chopping instruction waveform A4, operation of the device can be simplified. It is easy to alter the form of the output waveform of the function generator 10 by altering the generating function thereof. Also it is easy to alter the output signal to match variations of the inverter output frequency, so that it always has a similar waveform.

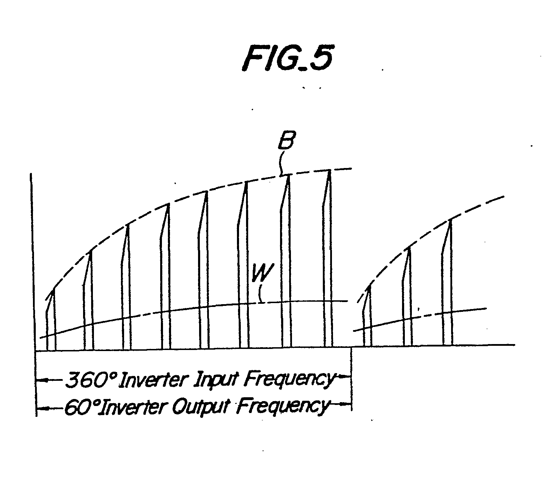

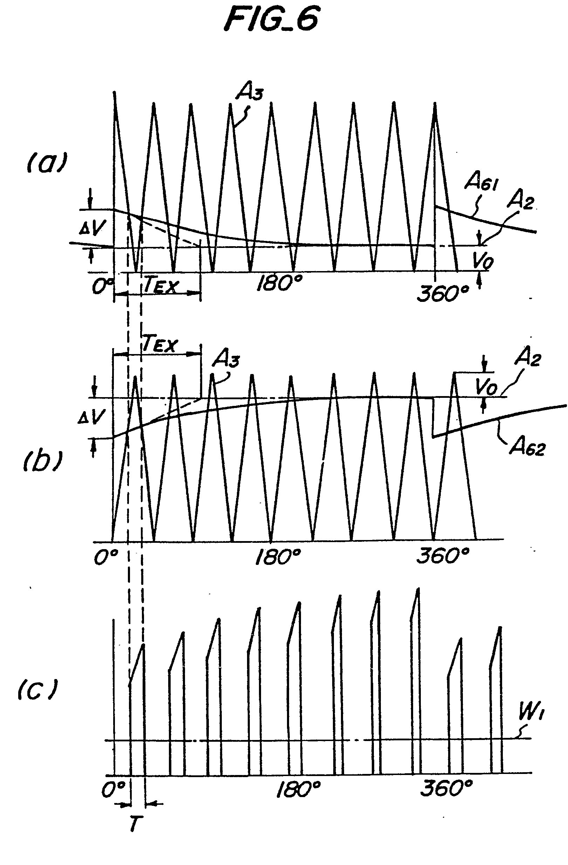

The advantage of the modulation system according to the present invention will be explained in more detail with reference to Figures 5 and 6.

Figure 5 shows an inverter input current waveform in the conventional system as shown in Figure 1, in which equi-interval pulse width modulation is effected by the modulation by the level signal A2 and the carrier signal A3. In this prior art system, the envelope B of the input current waveform of the inverter varies exponentially. The average current flowing in this stage is shown by W and a current having a frequency component which is 6 times that of the inverter output frequency flows in the circuit in response to the variation of this envelope B.

Figure 6 shows input current waveforms of an inverter device of the present invention. Figure 6 (a) and Figure 6 (b) show respectively waveforms similar to Figure 4, in which a sawtooth waveform A61 having an exponential fall, and a sawtooth waveform A62 having an exponential rise are applied.

In an embodiment in which a sawtooth waveform A61 having an exponential fall as shown in Figure 6 (a), is applied, the level signal frequency is 6 times the inverter output frequency (m = 3, n = 1) and the frequency of the carrier signal A3 is further integer multiple thereof, i.e. in the illustrated example 48 times the inverter output. The pulse width T is determined by the crossing points of the carrier signal A3 and the exponential function waveform A61. The pulse width decreases exponentially as shown in the drawings and the average value $W_1$ of the inverter input current for each cycle is substantially constant as shown in Figure 6 (c). Accordingly, any pulsating current component having 6 times the frequency with the inverter output frequency is suppressed, and at the same time the commutating peak current is also decreased by the decrease of the pulse width as will be explained later on.

There still remains the chopping frequency components. However, because of the filtering effect for the higher harmonics such components may be sufficiently suppressed so that a smooth D.C. current flows at the source side from the feeder line at the input side of the filter towards the return circuit. In this connection the D.C. level $V_0$ is so controlled that the normal inverter output voltage is proportional to the inverter output frequency just as in the conventional modulation system. The depth of level $\Delta V$ of the exponential function waveform A61 and its time constant $T_{EX}$ may also be correlated to the inverter output frequency, like the D.C. level $V_0$. By adjusting the fundamental frequency component of the inverter input current to be a minimum at an imput frequency of the inverter coinciding with the operating frequency of the security signal apparatus, and by maintaining that value of the level signal and its time constant, the current having a problem frequency component can be substantially removed, so that the object of the invention is achieved.

In practice, the device may be designed to effect normal modulation from the time of starting when there is little filtering effect, up to a time when the inverter input frequency passes the security signal frequency band using the commercial mains frequency or a predetermined frequency. The lower harmonic components are thus reduced to reduce current components which disturb the security signal devices.

The whole device including the inverter 7 can be miniaturized and light weight device produced without the need to enlarge the filter capacity. The device of the present invention is therefore particularly suitable for energizing an inverter of an electric train.

A sawtooth waveform A62 having an exponential rise, shown in Figure 6 (b) is an alternative to the waveform A61 of Figure 6 (a), and by using this waveform A62 an identical modulation result is obtained. The exponential function waveform A62 and the carrier signal A3 are both reversed in polarity, and the pulse width is determined when the carrier signal A3 is lower than the level signal A62 of the exponential waveform so that the pulse width T shown in Figure 6 (c) is obtained. In practice in the circuit arrangement shown in Figure 3, the output signal of the triangular waveform generator 4, the D.C. level $V_0$ of the adder 11, and the output of the function generator 10 may be reversed.

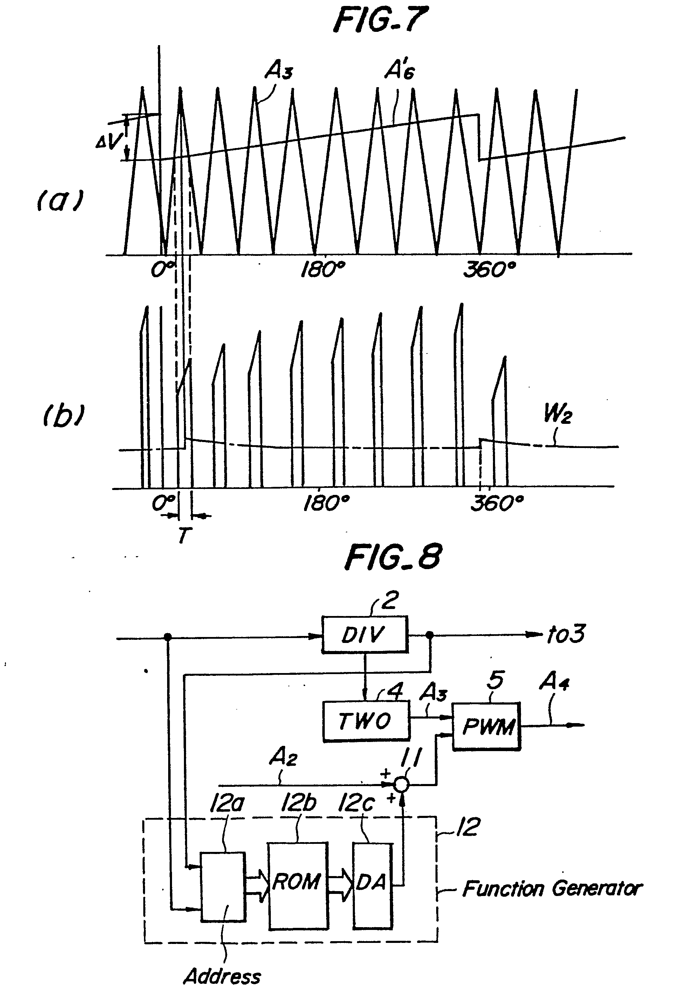

Figure 7 shows, in place of the advantageous exponential sawtooth waveforms A61 and A62 of the invention and shown in Figures 6 (a) and 6 (b), respectively, a level signal A'6 which is a linear sawtooth waveform. In this case the pulse width T of the inverter input current of each of the pulses in one cycle varies linearly with the phase angle $\theta$. In this arrangement the average value $W_2$ is not constant as can be seen from Figure 7 (b), but it is an improvement over the conventional waveform as shown in Figure 5.

For further improving the effect of the modulation device system of the present invention it is desirable to have a function generator which is always able to derive an analogous waveform irrespective of variations of the inverter output frequency. Such a device is illustrated in Figure 8 in which a function waveform generator 12 comprises an address instructor 12a, a waveform memory element 12b and a digital-to-analog (DA) converter 12c. The memory element 12b memorizes the exponential function waveform of Figure 6, and the digital signal read out from the waveform memory element 12b is converted into an analog signal by the DA converter 12c. As in the device of Figure 3, this analog signal output is added to the level signal A2 by the adder 11. The address instructor 12a successively renews the output signal by means of a pulse signal having a frequency substantially higher than the inverter output frequency, for example by an input from the frequency divider 2, to read out the content of the waveform memory element 12b. In order that the output of the DA converter 12c should be at a desired repetition frequency, the return to the initial condition at the desired time, for instance at the time when the output of the final stage reverses, is also effected by said pulse signal.

The present invention thus provides a novel PWM inverter device in which the current commutating duty of the inverter can be substantially reduced so as to decrease the lower order harmonic current components and to the decrease of filtering effect at low frequency operation. The inverter device is a small and light weight device.

## Claims

1. A PWM inverter device for energizing an A.C. motor, which device has a variable voltage and variable frequency output produced from a D.C. source by pulse width modulation, comprising an oscillator (1) for generating a pulse train whose frequency is an integral multiple of the output frequency of the inverter, a function waveform generator (10) controlled by the oscillator (1) to generate a level signal whose frequency is related to the inverter output frequency, a triangular waveform generator (4) for generating a triangular waveform carrier signal whose frequency is related to that of the inverter output signal, and a modulator (5) for comparing and mixing the level signal with the triangular waveform carrier signal, characterised in that the function waveform generator (10) is constructed to produce a level signal which is a sawtooth waveform having an exponential rise or fall, and the triangular waveform generator (4) is operable to produce a triangular waveform carrier signal whose frequency is an integral multiple of the frequency of that level signal.

2. A PWM inverter device as claimed in Claim 1, characterised in that the function waveform generator (12) includes a memory element (12b) for memorizing said sawtooth waveform having an exponential rise or fall which is read out of the memory element.

## Revendications

1. Dispositif onduleur PWM pour l'alimentation d'un moteur à courant alternatif, ce dispositif présentant une sortie à tension variable et à fréquence variable, fournie par une source de courant continu, par modulation de largeur d'impulsion, comprenant un oscillateur (1) desinté à produire un train d'impulsions dont la fréquence est un multiple entier de la fréquence de sortie de l'onduleur, un générateur de forme d'onde de fonction (10) commandé par l'oscillateur (1), pour produire un signal de niveau dont la fréquence est liée à la fréquence de sortie de l'onduleur, un générateur de forme d'onde triangulaire (4) destiné à produire un signal porteur de forme d'onde triangulaire dont la fréquence est liée à celle du signal de sortie de l'onduleur, et un modulateur (5) pour la comparaison et le mélange du signal de niveau avec le signal porteur de forme d'onde triangulaire, caractérisé en ce que le générateur de forme d'onde de fonction (10) est construit pour produire un signal de niveau qui est une forme d'onde en dents de scie, présentant une croissance ou une chute exponentielle, et en ce que le générateur de forme d'onde triangulaire (4) est utilisable pour produire un signal porteur de forme d'onde triangulaire, dont la fréquence est un multiple entier de la fréquence de ce signal de niveau.

2. Dispositif onduleur PWM selon la revendication 1, caractérisé en ce que le générateur de forme d'onde de fonction (12) comprend un élément à mémoire (12b) destiné à mémoriser ladite forme d'onde en dents de scie ayant une croissance ou une chute exponentielle qui est lue sur l'élément à mémoire.

**Patentansprüche**

1. Ein Pulsweitenmodulations-(PWM)-Wechselrichtergerät zum Versorgen eines Wechselstrommotors mit Energie, das ein Ausgangssignal mit veränderlicher Spannung und veränderlicher Frequenz durch Pulsweitenmodulation einer Gleichstromquelle erzeugt, mit einem Oszillator (1) zum Erzeugen einer Pulskette, deren Frequenz ein ganzes Vielfaches der Ausgangsfrequenz des Wechselrichters ist, mit einem Funktions-Signalform-Generator (10), der durch den Oszillator (1) gesteuert wird, um ein Pegelsignal zu erzeugen, dessen Frequenz in einer Beziehung zur Ausgangsfrequenz des Wechselrichters steht, mit einem Dreiecks-Signalform-Generator (4) zum Erzeugen eines Trägersignales mit Dreiecks-Signalform, dessen Frequenz in einer Beziehung zur Frequenz des Ausgangssignales des Wechselrichters steht, und mit einem Modulator (5) zum Vergleichen und Mischen des Pegelsignales mit dem Trägersignal mit Dreiecks-Signalform, dadurch gekennzeichnet, daß der Funktions-Signalform-Generator (10) derart aufgebaut ist, daß er ein Pegelsignal erzeugt, das eine Sägezahn-Signalform mit exponentiellem Anstieg oder Abfall ist, und daß der Dreiecks-Signalform-Generator (4) betätigbar ist, um eine Trägersignal mit Dreiecks-Signalform zu erzeugen, dessen Frequenz ein ganzes Vielfaches der Frequenz des Pegelsignals ist.

2. Ein Pulsweitenmodulations-(PWM)-Wechselrichtergerät nach Anspruch 1, dadurch gekennzeichnet, daß der Funktions-Signalform-Generator (12) ein Speicherelement (12b) hat, um die Sägezahn-Signalform mit Exponentiellem Anstieg oder Abfall zu speichem, welche aus dem Speicherelement ausgelesen wird.

0 023 116

## FIG. 1

### PRIOR ART

## FIG. 2

1

# FIG_3

# FIG_4

# FIG.5

—360° Inverter Input Frequency—
—60° Inverter Output Frequency—

FIG_6

(a)

(b)

(c)

## FIG.7

(a)

(b)

## FIG.8

5